Europäisches Patentamt

European Patent Office

Office européen des brevets

(19)

(11) **EP 1 304 576 A2**

(12) **EUROPÄISCHE PATENTANMELDUNG**

(43) Veröffentlichungstag:
 **23.04.2003 Patentblatt 2003/17**

(51) Int Cl.⁷: **G01P 3/489**

(21) Anmeldenummer: **02015262.5**

(22) Anmeldetag: **09.07.2002**

(84) Benannte Vertragsstaaten:
 **AT BE BG CH CY CZ DE DK EE ES FI FR GB GR
 IE IT LI LU MC NL PT SE SK TR**
 Benannte Erstreckungsstaaten:
 **AL LT LV MK RO SI**

(30) Priorität: **28.09.2001 DE 10148093**

(71) Anmelder: **Bayerische Motoren Werke
 Aktiengesellschaft
 80809 München (DE)**

(72) Erfinder:
 • **Vos, Serge
  80935 München (DE)**
 • **Zimprich, Wolfgang
  85737 Ismaning (DE)**
 • **Wimmer, Markus
  83052 Bruckmühl (DE)**
 • **Jautze, Marcus
  81543 München (DE)**

(54) **Verfahren zur Überwachung des Zustands eines Rades eines Kraftfahrzeuges**

(57) Die Erfindung betrifft ein Verfahren zur Überwachung des Zustands eines Rades eines Kraftfahrzeugs, bei dem ein Ausgangssignal eines Sensors in ein im wesentlichen rechteckförmiges Impulssignal umgeformt wird, wobei eine jeweilige Dauer der Impulse gemessen und ein insbesondere gewichteter Mittelwert zwischen der Dauer eines aktuellen Wertes und einem vorhergehenden Wert bestimmt wird, wobei ein aktueller Wert und ein vorhergehender Wert jeweils einen zeitlichen Abstand aufweisen bzw. eine bestimmte Schrittgröße auseinander liegen und ein Korrekturfaktor aus einer jeden Abweichung zwischen der Dauer eines aktuellen Wertes und einem jeweiligen Mittelwert bestimmt wird. Erfindungsgemäß wird eine Schrittgröße des Korrekturverfahrens an eine Fehlerordnung einer Störung angepasst. Bevorzugt wird die Schrittgröße mit einer zu eliminierenden periodischen Abweichung der m-ten Ordnung nach der Formel $j = \frac{1}{m} \cdot \frac{n}{4}$ bestimmt wird, bei Kraftfahrzeugen insbesondere nach der Formel $j = \frac{1}{m} \cdot 12$.

Fig. 1

**EP 1 304 576 A2**

**Beschreibung**

Die vorliegende Erfindung betrifft ein Verfahren zur Überwachung des Zustands eines Rades eines Kraftfahrzeugs nach dem Oberbegriff von Anspruch 1 sowie eine dementsprechende Vorrichtung.

Eine wesentliche Aufgabe bei der Überwachung des Zustands eines Rades eines Kraftfahrzeugs besteht in der Ermittlung einer Drehgeschwindigkeit. Nach dem Stand der Technik ist ein Ausgangspunkt für die Ermittlung der Drehgeschwindigkeit eines Kraftfahrzeugrades die Benutzung der bestehenden Hardware von Radschlupfregelsystemen, wie z.B. eines Antiblokkiersystems ABS, einer Anti Schlupf Control mit Traktionsregelung ASC+T und anderer. In bekannten Systemen wirkt ein Sensor vorzugsweise induktiv mit einem Geberrad zusammen, das mit dem Rad starr verbunden ist. Bei Automobilen weist das Geberrad eine Anzahl von üblicherweise 48 nahezu äquidistanten Zähnen zur Erzeugung eines elektrischen Ausgangssignals auf, das als Maß für eine augenblickliche Drehgeschwindigkeit des Rades ausgewertet wird. Es wird dabei z.B. der Umstand genutzt, dass bei einem Druckverlust eines Rades ein Anstieg der Drehgeschwindigkeit auf einer Verkleinerung des Reifendurchmessers basiert. Dazu wird das Ausgangssignal des Sensors in ein im wesentlichen rechteckförmiges Impulssignal umgeformt, wobei eine jeweilige Dauer der einzelnen Impulse gemessen wird.

Eine möglichst genaue Kenntnis der Drehgeschwindigkeit des Kraftfahrzeugrades ist dabei weniger für eine Bestimmung der Geschwindigkeit des Fahrzeugs selber als vielmehr für eine Überwachung des Radreifens interessant. Beispielsweise verfügen moderne Reifen über eine Notlaufeigenschaft, die auch bei starkem Druckverlust in dem Reifen das Fahren bis zu einer Geschwindigkeit von ca. 80 km/h zuläßt, ohne dass ein Fahrzeugführer direkt durch veränderte Fahreigenschaften von einem defekten Reifen Kenntnis sicher nehmen muss. Ein sicherer Fahrbetrieb ist jedoch jenseits der genannten Schwelle nicht mehr gegeben. Der Fahrer muss also aus Sicherheitsgründen durch ein Überwachungssystem auf einen Defekt eines Reifens hingewiesen werden. Aus diesem und anderen Gründen werden moderne Fahrzeuge zunehmend mit Reifenkontroll- und Reifendrucküberwachungssystemen ausgestattet, deren Funktion auf einer möglichst genauen Kenntnis der Drehgeschwindigkeit jedes der vier Kraftfahrzeugräder aufbaut oder auf dem Einsatz von Drucksensoren basiert.

In der DE 197 35 313 A1 wird ein Verfahren zur Bestimmung einer Drehgeschwindigkeit beschrieben, das dazu angewendet wird, um damit höherfrequente Anteile im Radgeschwindigkeitssignal zur Identifikation eines Reifendruckverlusts auszuwerten. Bei dem genannten Verfahren wird nach dem Messen einer Dauer eines Impulses ein insbesondere gewichteter Mittelwert zwischen einem aktuellen Wert der Dauer und einem vorhergehenden Wert bestimmt. Zur Messung der Dauer der Impulse des Drehzahlsensors wird die Zeit zwischen zwei steigenden Flanken eines Rechtecksignals durch eine Impulsbreitenmessung, durch Zählung von Impulsen eines deutlich höherfrequenten Signals, erfaßt und als Zählerstand $\tau_i$ zwischengespeichert. Die Zählerstände $\tau_i$ werden zu festen Zeiten $T_i$ ausgelesen und der weiteren Entwicklungsumgebung zur Verfügung gestellt. Wenn innerhalb eines Rechenzyklus mehrere Zählerstände erfaßt werden, wird darüber ein Mittelwert gebildet. Dessen reziproker Wert ist ein absolutes Maß für die Drehgeschwindigkeit des Rades. Je größer der Zählerstand, desto kleiner ist die Drehgeschwindigkeit. Auf diese Weise wird die Breite jedes Zahnes des Impulsrades mittels eines hochfrequent pulsenden Schwingungsquarzes erfaßt und in einen Puffer zwischengespeichert. Zu äquidistanten Zeitpunkten $T_i$, einem Rechenzyklus des verarbeitenden Algorithmus, wird der Puffer ausgelesen und aus den eingetroffenen Zählerständen ein Mittelwert gebildet. Damit liegen ein aktueller Wert und ein vorhergehender Wert jeweils eine bestimmte Schrittgröße auseinander bzw. sie weisen zueinander einen bestimmten zeitlichen Abstand auf. In einer Ausführungsform liegen die Vergleichswerte symmetrisch zu einem aktuell auszuwertenden Wert, wie noch anhand einer Abbildung in der Zeichnung beschrieben wird. Zudem wird ein Korrekturfaktor aus einer jeden Abweichung zwischen der Dauer eines aktuellen Wertes und einem jeweiligen Mittelwert bestimmt. Durch die starre Kopplung des Geberrades mit dem Reifen und eine Synchronisation zwischen dem Auswertealgorithmus und einem Winkelstand des Fahrzeugrades besteht eine feste Zuordnung zwischen einem jeweiligen Zahn des Geberrades und einem Korrekturfaktor. Durch die jeweiligen Korrekturfaktoren sollen systematisch wiederkehrende Fehler eliminiert werden, wobei zu Details dieses bekannten Verfahrens und zu Ausführungsbeispielen auf den Inhalt der DE 197 35 313 A1 selber verwiesen wird.

Es ist Aufgabe der vorliegenden Erfindung das vorstehend beschriebene Verfahren zur Überwachung des Zustands eines Rades unter Verbesserung der Zuverlässigkeit und Genauigkeit weiterzubilden und eine dementsprechende Vorrichtung zu schaffen.

Die Aufgabe wird erfindungsgemäß durch die Merkmale der jeweiligen unabhängigen Ansprüche gelöst. Vorteilhafte Weiterbildungen sind in den jeweiligen Unteransprüchen gekennzeichnet.

Aus dem vorstehend beschriebenen Verfahren nach dem Stand der Technik ist bekannt, dass bei einem Verfahren zur Überwachung des Zustands eines Rades eines Kraftfahrzeugs ein elektrisches Ausgangssignal eines Sensors in ein im wesentlichen rechteckförmiges Impulssignal umgeformt wird, wobei eine jeweilige Dauer der Impulse gemessen und ein insbesondere gewichteter Mittelwert zwischen der Dauer eines aktuellen Wertes und einem vorhergehenden Wert bestimmt wird. Dabei weisen ein aktueller Wert und ein vorhergehender Wert jeweils einen zeitlichen Abstand auf bzw. sie liegen eine bestimmte Schrittgröße auseinander, und es wird ein Korrekturfaktor aus einer jeden Abweichung zwischen der Dauer eines aktuellen Wertes und einem jeweiligen Mittelwert bestimmt.

Ein erfindungsgemäßes Verfahren zeichnet sich demgegenüber dadurch aus, dass eine Schrittgröße des Korrekturverfahrens an eine Fehlerordnung einer Störung angepaßt wird, um die Zuverlässigkeit der bereinigten Meßergebnisse zu erhöhen. Dabei liegt der vorliegenden Erfindung die Erkenntnis zugrunde, dass sich Störungen nach Ordnungen klassifizieren lassen. In der Praxis setzen sich Störungen in der Regel aus Teilstörungen verschiedener Ordnungen zusammen, wobei in einem Basismodell der vorliegenden Erfindung zur Klassifizierung einer Störung eine mathematische Zerlegung eines realen physikalischen Störsignals nach Fourier vorgenommen wird. Eine maximale Periodenlänge systematischer Störungen eines Radreifens ist somit durch die einfache Umfangslänge des Radreifens gegeben, wiedergegeben durch eine feste Zuordnung zu den Zähnen des Impuls-Geberrades. Damit beschreibt eine Störung erster Ordnung, real ist das ein Exzentrizitätsfehler bzw. Achsversatz, eine Grundschwingung. Fehler zweiter und höherer Ordnung repräsentieren die Harmonischen dieser Grundschwingung. Der Einfluß der Anpassung einer Schrittweite auf eine jeweilige Störung bzw. Störungsordnung wird nachfolgend noch unter Bezug auf Abbildungen der Zeichnung detailliert erläutert.

In einer Weiterbildung weist ein erfindungsgemäßes Verfahren eine Schrittgröße j auf, die sich aus einer zu eliminierenden periodischen Abweichung der m-ten Ordnung nach der folgenden Formel

$$j = \frac{1}{m} \cdot \frac{n}{4}$$

bestimmen läßt. Dabei wird hinsichtlich der Anzahl der Impulszähne an einem Impuls-Geberrad, der Größe n, zwischen dem Kraftfahrzeugbereich mit n = 48 und einem Einsatz bei Motorrädern mit n = 96 Zähnen unterschieden. Für den Kraftfahrzeugbereich als ein bevorzugtes Einsatzfeld der Erfindung vereinfacht sich die gegebenen Formel für eine Ausführungsform mithin zu

$$j = \frac{1}{m} \cdot 12.$$

Dabei werden vorzugsweise mindestens zwei unterschiedliche Schrittgrößen j kombiniert angewendet. Insbesondere ergibt sich so eine Korrekturmethode als mehrstufiges Verfahren, das vorzugsweise als eine Reihenschaltung zweier erfindungsgemäßer Verfahren ausgeführt wird, wobei für Kraftfahrzeuge mit den Schrittgrößen j = 12 und j = 3 gearbeitet wird. Eine anschauliche Begründung für diese Auswahl wird wiederum anhand der Beschreibung eines Ausführungsbeispiels und unter Bezugnahme auf Abbildungen der Zeichnung gegeben werden. Auf die überraschende Dominanz bestimmter Störungsordnungen und die relativ geringen Mittel zu deren Eliminierung wird an dieser Stelle dann im Detail eingegangen werden. Für Motorräder gilt jeweils entsprechendes, so daß hierauf nicht gesondert eingegangen wird.

In einer wesentlichen Weiterbildung der Erfindung wird eine Filterung zur Minderung des Einflusses äußerer Störanregungen vorgenommen. Dabei wird vorzugsweise in jeder Umdrehung des Rades ein neu berechneter aktueller Faktor $\kappa_{i-j}$ mit einem ereignisgetriggerten Filter nach einer $PT_1$-Struktur gefiltert, um als Ergebnis einen verbesserten Korrekturfaktor $k_i$ zu erhalten. In einer bevorzugten Ausführungsform der Erfindung berechnet das Filter zu einer momentanen Umdrehung N für den jeweiligen Zahn mit Index i einen gewichteten Mittelwert $k_{N,i}$ zwischen dem momentanen, gerade errechneten Faktor $\kappa_i$ und dem gemittelten der vorherigen Umdrehungen Korrekturfaktor $k_{N-1,i}$. Es führt die folgende Übertragungsfunktion aus:

$$k_{N,i} = \frac{a \cdot k_{N-1,i} + \kappa_i}{a + 1}$$

Bei der Umsetzung eines erfindungsgemäßen Verfahrens werden deutlich verbesserte Werte für die Ermittlung einer Drehgeschwindigkeit erzielt, die sich auch in zuverlässigeren Werten für die Bestimmung eines Reifenzustands, z.B. hinsichtlich seines Innendrucks, auswirken. Vorteilhafterweise können die zur Korrektur des gewandelten Sensorsignals bestimmten Korrekturfaktoren mit ihrer festen Zuordnung zu einem jeweiligen Zahn zur Bestimmung einer Radunförmigkeit genutzt werden. Auf dem beschriebenen Verfahren aufbauend können die erfassten Korrekturfaktoren auch ausgewertet werden, um eine Änderung der Radungleichförmigkeit festzustellen und damit, ähnlich dem bekannten Verfahren bei Reifendruckverlust, diese Änderungen zu protokollieren und/oder einen Warnhinweis mit oder ohne weitere Eingriffe auszulösen. Für eine ausführliche Darstellung des Verfahrens und die im Vergleich zu bekannten Verfahren auftretenden deutlichen Vorteile hinsichtlich der Genauigkeit und der Zuverlässigkeit wird an dieser Stelle auf die Zeichnung und die Beschreibung eines Ausführungsbeispiels verwiesen.

Eine gemäß vorliegender Erfindung ausgebildete Einheit kann unter Wahrung der vorstehend genannten Vorteile auch in einfacher Weise auf einen Einsatz in kleineren oder größeren Fahrzeugen unter Verwendung der verschiedensten Signalquellen bzw. Sensoren angepaßt werden, also insbesondere auch für Motorräder mit einem Impulsgeberrad mit n = 96 Zähnen. So kann eine erfindungsgemäße Einheit unter Einsatz eines erfindungsgemäßen Verfahrens und einer dementsprechenden Vorrichtung für einen weiten Anwendungsbereich angepaßt werden. Dabei wird vorteilhafterweise unter Nutzung der Rechenkapazität bereits vorhandener Mikroprozessoren bekannter Brems- und/oder Traktionskontrollsysteme eine Radüberwachung in einem von bisherigen Systemen noch ungenutzten Zeitschlitzen von ca. 5 ms Länge durchgeführt. Durch eine wesentlich verbesserte Geschwindigkeitsabschätzung mit Plausibilitätsprüfung wird in einer Ausführungsform der Erfindung somit insbesondere eine zuverlässigere und optimierte Druckabschätzung ermöglicht, daneben kann auch eine Ungleichförmigkeit und sogar eine Änderung einer Ungleichförmigkeit Änderung relativ zum Rad festgestellt werden. Das Geschwindigkeitssignal für die Rad-Schlupfregelsysteme weist bei Verarbeitung nach einem erfindungsgemäßen Verfahren eine gegenüber dem Stand der Technik wesentlich verbesserte Qualität auf.

Eine Ausführungsform der Erfindung wird nachfolgend anhand der beigefügten Zeichnungen näher beschrieben. Dabei zeigt:

Fig. 1 eine Darstellung in Form eines Blockschaltdiagramms;

Fig. 3 ein digitales Filter zur Berechnung von Korrekturfaktoren;

Fig. 4a - 4f eine Darstellung einer ersten harmonischen Impulsrad-Abweichung und Darstellungen deren höhere Ordnungen mit der Wirkung einer jeweiligen Korrekturmethode mit Angabe einer angepaßten Schrittgröße;

Fig. 5a eine Gegenüberstellung einer aufgeprägten Abweichung und der nach dem aus dem Stand der Technik bekannten Verfahren erfaßte Abweichung aufgetragen über eine Radumfang mit n = 48 Zähnen eines Impuls-Geberrades als Skalierung;

Fig. 5b eine Gegenüberstellung einer aufgeprägten Abweichung und der nach einem erfindungsgemäßen Verfahren erfaßte Abweichung analog der Darstellung von Fig. 5a;

Fig. 6a - 6d aufeinander bezogene Darstellungen einer Drehgeschwindigkeit als Rohsignal, als unkorrigiertes Rohsignal eines Sensors, als Ergebnissignal unter Anwendung des bekannten Verfahrens und als Ergebnissignal unter Anwendung eines erfindungsgemäßen mehrstufigen Verfahrens.

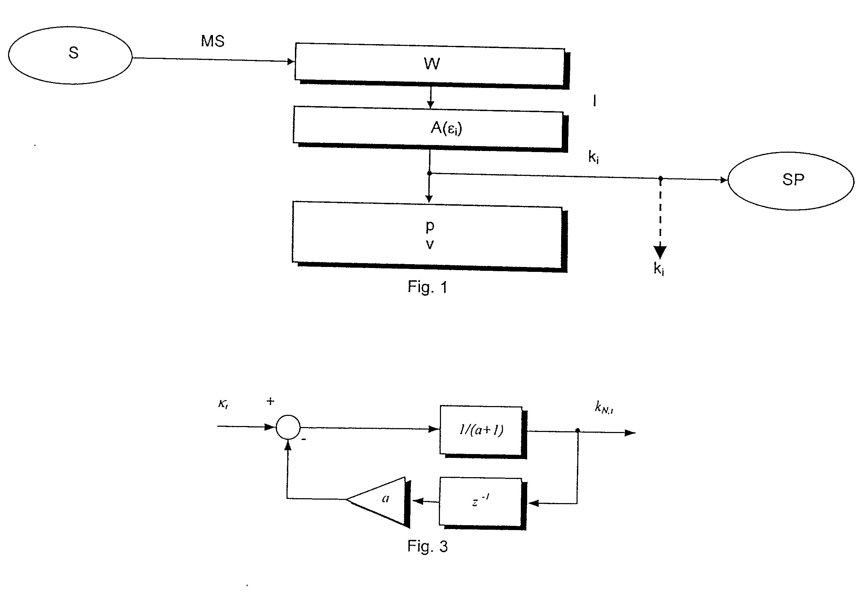

Fig. 1 zeigt eine Blockdarstellung einer Vorrichtung zur Umsetzung eines aus der DE 197 35 313 A1 bekannten Verfahrens, bei dem ein Rad sowie ein Impulsgeberrad mit n = 48 Zähnen der Einfachheit halber nicht dargestellt sind. Die Vorrichtung umfaßt demnach einen Sensor S mit einem Ausgangssignal MS.

Der Sensor S ist zur Ausgabe eines Impulssignals I mit einem Signalwandler W verbunden. Das Impulssignal I liegt dann an einem Eingang einer Einheit $A(\varepsilon_i)$ zur Ermittlung der Fehler $\varepsilon_i$ je Zahn i an. Auf deren Basis wird ein jeweiliger Korrekturfaktor $k_i$ nach der Formel $k_i = \varepsilon_i + 1$ bestimmt, die zum einen in einem Speicher SP abgelegt werden. Hauptsächlich dienen die Korrekturfaktoren $k_i$ jedoch einer optimierten Bestimmung einer Geschwindigkeit v des Rades. Auf der Grundlage einer möglichst zuverlässigen und genauen Kenntnis der Geschwindigkeit v wird dann ein Rückschluß auf einen Druck p im Reifeninnern geführt, da ein Druckabfall eine Minderung des Durchmessers und mithin eine ansteigende Umdrehungsgeschwindigkeit und eine Verschiebung der charakteristischen Fahrwerksfrequenzen hervorruft. Andererseits sind die Korrekturfaktoren $k_i$ einem jeweiligen Zahn i des Impulsgeberrades fest zugeordnet, so dass z.B. ein Stein im Profil der Lauffläche eines Rades erkannt und im Rahmen einer Werkstattwartung entfernt werden kann. Zudem können auf der Basis gespeicherter Langzeitdaten Rückschlüsse auf Reifendefekte oder Schwachstellen gezogen werden.

Gemäß der vorliegenden Erfindung wird nun die Erkenntnis genutzt, dass an einem Reifen verschiedene Formen von Störungen auftreten, die in einer Zerlegung des Meßsignals MS des Sensors S nach Fourier als Störungen verschiedener Ordnungen angegeben werden können. Auf dieser Erkenntnis baut das nachfolgend im Detail beschriebene Verfahren auf:

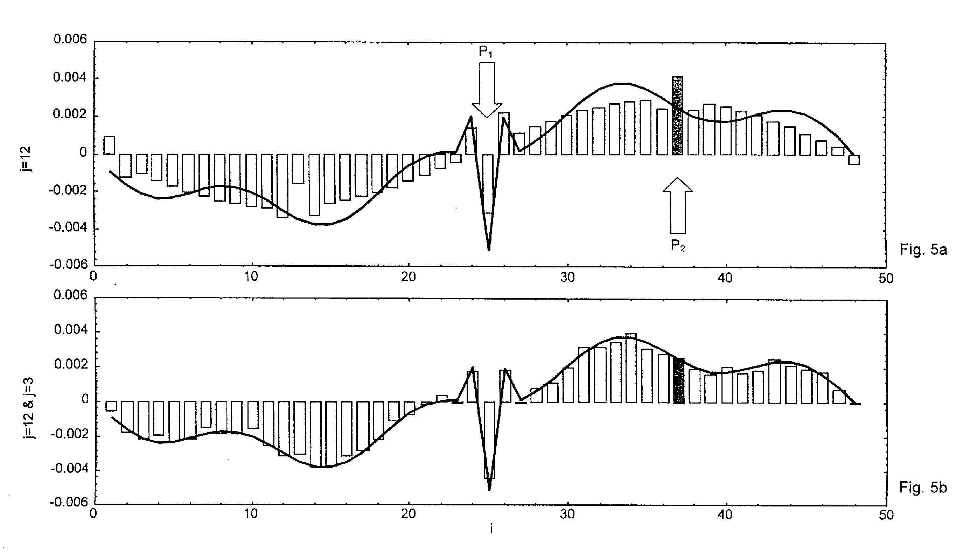

Im praxisnahen Fahrbetrieb hat sich für Kraftfahrzeuge die Auslegung mit einer Schrittgröße j = 12, ein Viertelkreis-Schritt über dem Umfang des Impulsgeber-Rades, bisher als günstige Auslegung bewährt, wie ausführlich in der DE 197 35 313 A1, auf deren Inhalt hier ausdrücklich Bezug genommen wird, beschrieben ist. Bei der Überprüfung auf Plausibilität, wobei absichtlich ein einzelner Zahn des Impulsrades verformt und somit eine zusätzliche primäre Abweichung aufgeprägt wurde, hat sich jedoch gezeigt, dass in bestimmten Fällen eine einstufige Korrekturmethode mit der Schrittgröße j = 12 nicht ausreichen wird. Zwar findet man an der richtigen Stelle, siehe Pfeil $P_1$ in Fig. 5a, und in der richtigen Größe diese Einzelabweichung im Gesamtbild der Korrekturfaktoren wieder, an der gegenüberliegenden Stelle, eine halbe Radumdrehung verschoben, entsteht ein ähnlich großer Korrekturwert, aber mit entgegengesetztem Vorzeichen, siehe Pfeil $P_2$ in Fig. 5b. Es kommt zu einer Spiegelung der Einzelabweichung an einer Stelle, an der keine derartigen Fehler vorhanden sind. Um auch diese Fälle zu erfassen, wird, abhängig von der Bauart und Auslegung der Radgeschwindigkeitserfassung, die Korrekturmethode als mehrstufiges Verfahren mit unterschiedlichen Interpolationsintervallen ausgelegt, wie nachfolgend im Detail ausgeführt und illustriert.

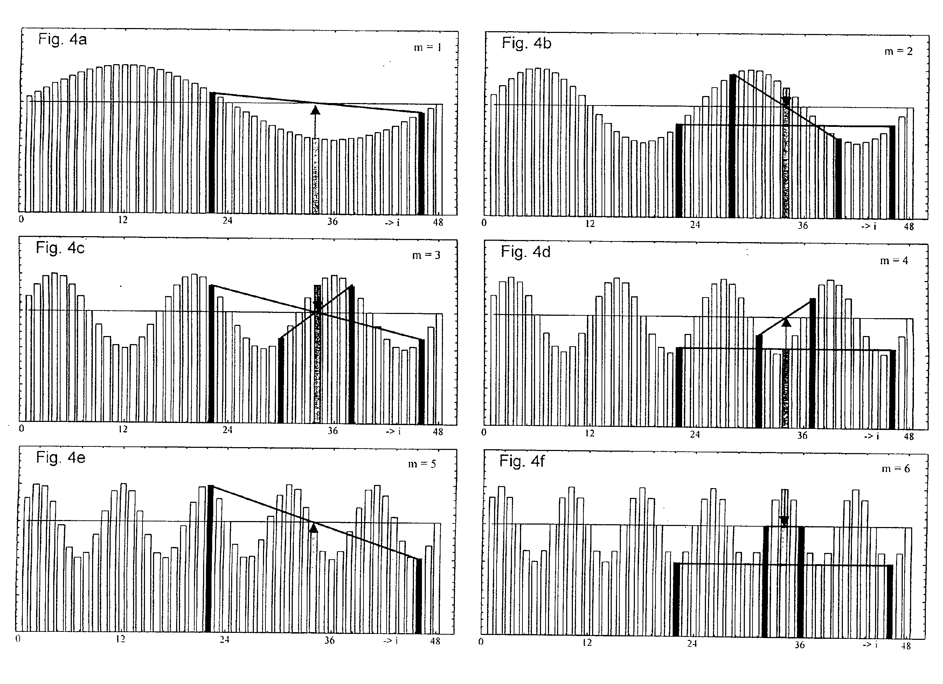

Die systematischen Abweichungen der Radgeschwindigkeitserfassung werden keine reine Sinusform aufweisen. Die auf eine Sinusabweichung abgestimmte Korrekturmethode wird deshalb nicht in der Lage sein, das ganze Spektrum an möglichen Abweichungen zu erfassen, außerdem verstärkt die 12er Korrekturmethode prinzipbedingt die vierte Oberwelle. Da nach Fourier jede zeitlich begrenzte oder zeitlich ausgedehnte, aber periodische Funktion sich durch eine Reihe von Sinus- und Kosinustermen entwickeln läßt, folgt zunächst ein Überblick der möglichen Abweichungen erster und höherer Ordnung. Fig. 4a - 4f zeigt eine Darstellung einer ersten harmonischen Impulsrad-Abweichung und Darstellungen deren höhere Ordnungen mit der Wirkung einer jeweiligen Korrekturmethode mit Angabe einer angepaßten Schrittgröße. Daraus ist ersichtlich, dass eine Abweichung erster Ordnung sich mit einer Schrittgröße j = 12 am besten korrigieren läßt, siehe Fig. 4a. Die Zählerstände werden für eine Umdrehung dargestellt, zusammen in einem Bild mit deren Mittelwert. Die Abweichungen müssen auf den mittleren Zählerstand korrigiert werden, und der Pfeil gibt die Richtung der Korrekturwirkung an. Unterschiedliche Abweichungen in den Zählerständen brauchen deswegen abweichungsbedingt andere Schrittgrößen des Korrekturverfahrens.

Wie sich in den Abbildungen der Figuren 4a, c und e zeigen läßt, ist die Korrekturmethode mit einer Schrittgröße j = 12 theoretisch in der Lage, Abweichungen ungerader Ordnung zu eliminieren. Als Beispiel wird die Wirkung anhand des willkürlich gewählten Zählerstandes i = 34 erläutert. Im Falle einer Abweichung ungerader Ordnung wird stets auf den mittleren Zählerstand korrigiert, siehe die Linie in den Figuren 4a, c und e. Die Gerade kreuzt die mittlere Geschwindigkeit an der Stelle des zu korrigierenden Zählerstandes, in diesem Fall: Index i = 34. Größe und Richtung der eingezeichneten Pfeile zeigen in welche Richtung und auf welchen Wert korrigiert wird. Zusammengefaßt ist eine Korrekturmethode mit Schrittgröße j = 12 theoretisch in der Lage, alle periodischen Abweichungen ungerader Ordnung zu korrigieren.

Abweichungen gerader Ordnung können jedoch nicht mit dieser Schrittgröße eliminiert werden. Da bei Abweichungen gerader Ordnung die Mittelwertbildung zwischen zwei gleich großen Zählerständen erfolgt, hinterläßt die Korrekturmethode eine restliche Abweichung gerader Ordnung, siehe Linie in den Figuren 4b, d und f. Ein anderes Problem ist, dass bei Einzelabweichungen die vierte Ordnung künstlich verstärkt wird, da die Wirkungskette der Korrekturmethode einerseits zu kurz und anderseits ganzzahlig in der Gesamtzahl der Impulszähne paßt. Der Zählerstand mit Index i = 34 wird nicht auf die mittlere Geschwindigkeit gelegt; es bleibt eine Differenz bestehen, welche die Auswertung der Signalfrequenzen deutlich erschweren wird. Eine Halbierung der Schrittgröße auf j = 6 zeigt nichtsdestoweniger, dass damit Abweichungen zweiter Ordnung eliminiert werden können, siehe Linie in Fig. 4b. Eine weitere Reduzierung der Schrittgröße auf j = 3 läßt Abweichungen der vierten Ordnung verschwinden, siehe Linie in Fig. 4d, schließlich können Abweichungen sechster Ordnung mit einer Schrittgröße j = 2 reduziert werden, siehe Linie in Fig. 4f. Zusammengefaßt lassen sich periodische Abweichungen der geraden m-ten Ordnung bei n = 48 Zähnen mit einer Schrittgröße j nach der folgenden Gleichung

$$j = \frac{1}{m} \cdot 12$$

korrigieren. Eine Korrekturmethode mit Schrittgröße j nach der vorstehenden Formel ist in der Lage, eine periodische Abweichung der m-ten geraden Ordnung zu eliminieren. Diese Gleichung gilt sogar auch für Abweichungen der ersten und dritten Ordnung, siehe Fig. 4a und c. Näherungsweise kann unter der Berücksichtigung nicht ganzzahliger Schrittgrößen, dies würde eine gewichtete Mittelwertbildung zwischen zwei stützenden Zählerständen bedeuten, eine Abweichung der fünften Ordnung korrigiert werden. Eine Berücksichtigung noch höherer Frequenzen erscheint derzeit als nicht sinnvoll, so dass die angegebene Formel für die hier betrachteten Störungsordnungen generell eingesetzt wird.

Mit einer Schrittgröße j = 1 werden Einzelabweichungen noch nicht optimal korrigiert. Eine Einzelabweichung braucht zur Korrektur eine Schrittgröße, die größer als j = 1 ist. In einer bevorzugten Ausführungsform wird die Korrekturmethode als mehrstufiges Verfahren mit einer Reihenschaltung der Schrittgrößen j = 12 und j = 3 ausgelegt. Grund für die Wahl der Schrittgröße j = 3 ist, dass es mit der Schrittgröße j = 12 nicht ausreichend möglich ist, auftretende Abweichungen der vierten Ordnung zu eliminieren. Mit einer Schrittgröße j = 3 hingegen können sowohl periodische Abweichungen der vierten Ordnung, als auch Einzelabweichungen korrigiert werden.

Die Abbildung von Fig. 5a zeigt eine Gegenüberstellung einer aufgeprägten Abweichung und der nach dem aus der DE 197 35 313 A1 bekannten Verfahren erfassten Abweichung, aufgetragen über einen Radumfang mit n = 48 Zähnen eines Impuls-Geberrades als Skalierung. Dabei werden in einem realen Fahrbetrieb folgende Komponenten in einem Sensorsignal erfaßt:

$\Omega_G$    der Gleichanteil, d.h. die tatsächliche Fahrgeschwindigkeit

$\Omega_N$    das Nutzsignal, d.h. hochfrequente Fahrwerksschwingungen

$\Omega_S$    das Meßrauschen, das keine systematischen Abweichungen darstellt.

Die Änderung der tatsächlichen Fahrgeschwindigkeit aufgrund Bremsen und Beschleunigen ist im Verhältnis zu den hochfrequenten Fahrwerksschwingungen sehr niederfrequent und schlagen sich der Einfachheit halber im Gleichanteil nieder. Die Drehgeschwindigkeit, die von der virtuellen Meßtechnik erfaßt wird, wird somit mit folgender Summenbildung dargestellt,

$$\Omega_{Rad} = \Omega_G + \Omega_N + \Omega_S.$$

Die Einheit der Drehgeschwindigkeit wird in Umdr/s (rev/sec) dargestellt. Die momentane aktuelle Berechnung der Drehgeschwindigkeit erfolgt mittels einer sehr viel schnelleren Rate als die Frequenz der zu untersuchenden Einflüsse. Anschließend wird ein Simulationsmodell der Radgeschwindigkeitserfassung aufgestellt. Der Zählerstand läßt sich mit folgender Formel nachbilden:

$$\tau_i = \frac{1}{\Omega_{Rad} \cdot n} \cdot f_{Zähler}.$$

In dieser obenstehenden Formel ist n die Anzahl der Zähne am Impulsrad, $f_{Zähler}$ ist die Zählerfrequenz. Bei gleicher Fahrgeschwindigkeit werden in etwa gleich große Zählerstände entstehen. Wichtig dabei ist, dass die Synchronisation zwischen Zahnkranz und Index beibehalten bleibt. Nachdem die Zählerstände aufgrund der obengenannten Anteile in der Drehgeschwindigkeit berechnet worden sind, werden die systematischen Abweichungen des Impulsrades aufgeprägt.

In Fahrversuchen hat es sich gezeigt, dass die Ungleichförmigkeit des im Versuchsträger verwendeten Impulsrades hauptsächlich aus einer kombinierten Abweichung der ersten und vierten Ordnung besteht. Um die Wirkung auf Einzelabweichungen zu testen, wird eine zusätzliche positive Einzelabweichung für den Zahn mit Index 25, mit zwei kleineren an beiden Seiten nebenan aufgeprägt. Die reine Fahrgeschwindigkeit beträgt 150 km/h oder $\Omega_G = 20.8$ Umdr/s, und es entstehen nach vorstehender Gleichung bei einer Zählerfrequenz von zirka 1 MHz Zählerstände um 1000 Einheiten.

Die prozentuale Gesamtabweichung des Impulsrades wird von der durchgezogenen Linie in den Figuren 5a und 5b dargestellt, wobei Fig. 5b analog zu der Darstellung von Fig. 5a eine Gegenüberstellung einer aufgeprägten Abweichung und der nach einem erfindungsgemäßen Verfahren erfaßte Abweichung zeigt. Das Ergebnis der einstufigen Korrekturmethode nach Fig. 5a mit j = 12 und der in Reihe geschalteten zweistufigen Korrekturmethode von Fig. 5b mit j = 12 und j = 3 wird nach einer geeigneten Einschwingzeit, die jeweils zirka 5s für beide Simulationsvarianten betragen hat, direkt unter dem ersten Ergebnis dargestellt. Unterschiede zwischen aufgeprägter und erfaßter Abweichung lassen sich auf diese Weise deutlicher veranschaulichen. In der oberen Abbildung ist deutlich zu erkennen, dass sich die einstufige Korrekturmethode primär dafür eignet, Abweichungen der ersten Ordnung heraus zu filtern. Die Einzelabweichung wird an der richtigen Stelle $P_1$ erfaßt, nur leider entstehen alle Viertelradumdrehungen davon entfernt Korrekturfaktoren an Stellen $P_2$, an denen sich keine derartigen Fehler befinden, siehe die durchgezogene Linie für die ausgeprägte Abweichung. Die Abweichung vierter Ordnung ist für die einstufige Korrekturmethode konzeptbedingt unsichtbar. Im Gegensatz paßt sich die kombinierte Korrekturmethode mit den in Folge geschalteten Schrittgrößen j = 12 und j = 3 genau an die aufgeprägten Abweichungen an. An den richtigen Stellen und in der richtigen Größe werden die systematischen Fehler erfaßt, siehe Fig. 5b in Vergleich zu Fig. 5a.

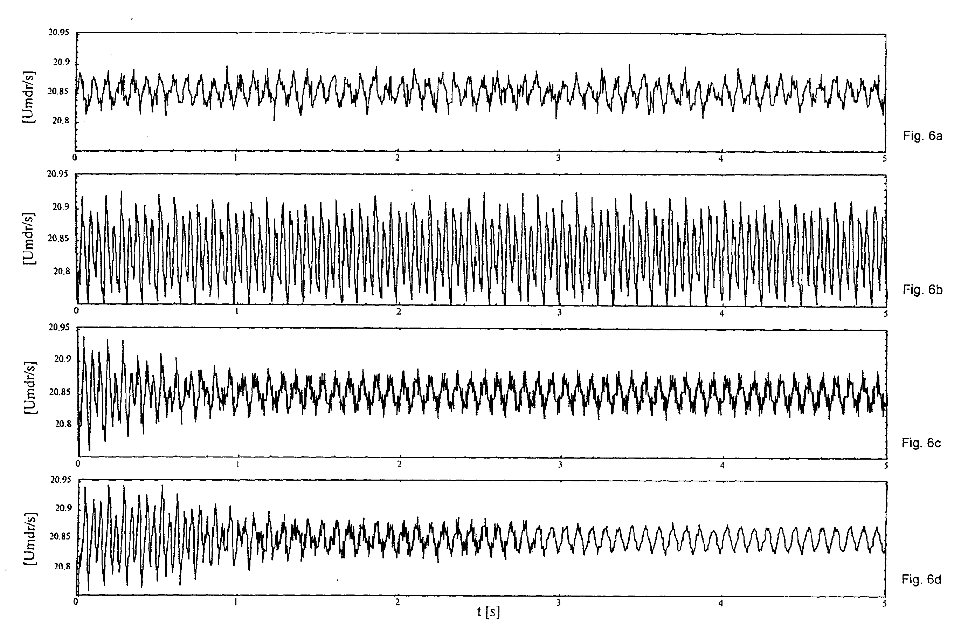

Da die Korrekturmethode anfänglich einige Umdrehungen braucht, um die Register zu füllen und sich anschließend auf die Korrekturfaktoren einzulernen, darf das Ergebnis der Korrekturmethode erst nach zirka 4 s weiterverwendet werden. Zur Darstellung der Wirkung der Korrekturmethode werden die ersten fünf Sekunden dargestellt, siehe Fig. 6a-d mit aufeinander bezogene Darstellungen einer Drehgeschwindigkeit als physikalisches Rohsignal, als unkorrigiertes Rohsignal eines Sensors, als Ergebnissignal unter Anwendung des vorstehend genannten bekannten Verfahrens und als Ergebnissignal unter Anwendung eines erfindungsgemäßen mehrstufigen Verfahrens.

Das Signal der Drehgeschwindigkeit $\Omega = 20.85$ Umdr/s beinhaltet zusätzlich als Nutzsignal eine 12 Hz Schwingung mit einer Amplitude von 0.02 Umdr/s und als Störsignal ein normal verteiltes "weißes" Rauschen mit einer Standardabweichung von 0.01 Umdr/s, siehe Fig. 6a. Aufgrund der in Fig. 5 dargestellten Abweichungen der ersten und vierten Ordnung, sowie einer Einzelabweichung, ist der Einfluß der systematischen Fehler absichtlich größer als das Nutzsignal gewählt. Das Drehgeschwindigkeitssignal wird von der meßtechnischen Erfassung derart verfälscht, dass eine vernünftige Auswertung des Nutzsignals unmöglich wird, siehe Fig. 6b. Ohne Korrekturmethode ist man nicht in der Lage, die charakteristischen Frequenzen des Fahrwerks unter allen Umständen dem Drehgeschwindigkeitssignal zu entnehmen. Die einstufige Korrekturmethode mit einer Schrittgröße j = 12 liefert schon ein wesentlich verbessertes Ergebnis, aber es gibt weiterhin Resteinflüsse der aufgeprägten Abweichungen, welche die Frequenzauswertung erheblich beeinträchtigen, siehe Fig. 6c. Die Drehfrequenz erster Ordnung kann mit der einstufigen Korrekturmethode fast komplett geglättet werden, es bleiben jedoch störende Einflüsse höherer Ordnungen erhalten. Eine Auswertung im Bereich der Torsionsschwingung des Reifens wird vorwiegend erschwert, so nicht unmöglich. Schließlich bringt die zweistufige Korrekturmethode die geforderte Signalgüte, siehe Abbildung von Fig. 6d. Als Ausgangssignal der Korrekturmethode liegt bereits nach 4 s ein sauberes Drehgeschwindigkeitssignal mit dem deutlich hervorgehobenen Nutzanteil des aufgeprägten 12 Hz Sinussignals vor. Aufgrund der Mittelwertbildung über allen innerhalb eines Rechenzyklus erfaßten Zählerständen, in diesem Fall 5 pro 5 ms, wird zusätzlich der Einfluß des Rauschens unterdrückt. Es entsteht ein Ergebnis, das sich sogar besser auswerten läßt, als das ursprüngliche physikalische Rohsignal nach Fig. 6a.

Aufgrund der Digitalisierung der Meßumgebung und der Tatsache, dass die Drehgeschwindigkeit keineswegs konstant ist, ist eine saubere Trennung zwischen einerseits der Drehfrequenz des Rades, und somit der ersten Grundfrequenz der störenden Abweichungen, und andererseits einer charakteristischen Fahrwerksfrequenz auch dann möglich, wenn beide Frequenzen sehr nah nebeneinander liegen. Mit den bereits berechneten Korrekturfaktoren werden die neu eingetroffenen Zählerstände korrigiert und zu einem Drehgeschwindigkeitswert gemittelt. Zudem ist die Auslegung einer $PT_1$-Filterung der Korrekturfaktoren $k_i$ gemäß Fig. 3 so gewählt worden, dass gleiche Frequenzen beider Anteile kurzfristig einen unwesentlichen Einfluß auf die Korrekturfaktoren haben. Das Vermögen der Korrekturmethode, störende systematische Abweichungen scharf vom Nutzsignal zu trennen, wird somit sichergestellt.

Fig. 3 stellt ein digitales Filter zur Berechnung von Korrekturfaktoren dar. Um den Einfluß auf die Berechnung der Korrekturfaktoren durch die stochastische Fahrbahnanregung zu verhindern, wird der in jeder Umdrehung neu berechnete aktuelle Faktor $\kappa_{i-j}$ mit einem ereignisgetriggerten Filter mit einer $PT_1$-Struktur nach Fig. 3 gefiltert. Ohne diese langfristige Glättung des Korrekturfaktors würde eine von der Fahrbahn angeregte Schwingung in dem Signal der Radgeschwindigkeit ansonsten als systematische Abweichung des Impulsrades interpretiert werden, und aus dem gewünschten Nutzsignal heraus gefiltert werden. Das Filter berechnet für den jeweiligen Zahn mit Index i einen gewichteten Mittelwert $k_{N,i}$ zwischen dem momentanen, gerade errechneten Faktor $\kappa_i$ und dem gemittelten der vorherigen Umdrehungen Korrekturfaktor $k_{N-1,i}$ ,nach folgender Formel:

$$k_{N,i} = \frac{a \cdot k_{N-1,i} + \kappa_i}{a + 1}$$

Die n = 48 Faktoren $\kappa_i$ werden nach dieser Gleichung jede Umdrehung N neu berechnet. Als Eingangsgröße für das Filter wird der Wert $\kappa_i$ verwendet. Der Faktor a bestimmt die Zeitkonstante des Filters und gibt an, welchen prozentualen Beitrag der gerade errechnete Faktor $\kappa_i$ in den Korrekturfaktor $k_{N,i}$, der zur letztendlich Korrektur des erfaßten Zählerstandes verwendet wird, hat. Die Filterung konvergiert zu der einzelnen Abweichung des Impulsrades, sie ist somit stabil. Während der Laufzeit des Verfahrens wird der Faktor a, unter der Berücksichtigung der zuvor hergeleiteten Stabilitätsforderung, angepaßt. Am Anfang sorgt ein kleiner Wert a für das schnelle Einschwingen auf den richtigen k-Wert. Nach einiger Zeit wird der Faktor a vergrößert, wodurch kurzfristige Einflüsse aus Störungen oder ähnliches weniger Gewicht bekommen und somit momentan nicht so stark in die Korrekturfaktoren eingehen. Die Auflösung und Genauigkeit der charakteristischen Frequenzberechnung werden dadurch gesteigert. Je größer a ist, desto langsamer wird die Zeitkonstante des diskreten Filters.

Ein wesentlicher Ausgangspunkt bei der Erfassung der Zählerstände ist bei der verbesserten Methode, dass die Reihenfolge des zeitlichen Eintreffens der Zählerstände erhalten bleibt und die Synchronisation zwischen Auswertealgorithmus und aktuellem Winkelstand des Rades beibehalten wird, so dass eine feste Zuordnung zwischen einem jeweiligen Zahn i und einem Korrekturfaktor $k_i$ besteht.

Damit ist eine wesentliche Verbesserung in der Genauigkeit und Zuverlässigkeit bei der Bestimmung der Geschwindigkeit v des Rades erreicht worden, so dass Gefahren, die aus einem unbemerkten Druckabfall in einem Reifen herrühren, durch eine frühzeitige und zuverlässige Erkennung eines Druckverlustes minimiert werden.

Wo immer es Teile gibt, die sich um eine Achse drehen, tritt aber auch das Problem der Ungleichförmigkeit auf. Das bedeutet, dass damit unerwünschte und unkontrollierte Kräfte auftreten, die den Rundlauf stören, die den Verschleiß fördern, die zerstörend wirken und die die Sicherheit beeinträchtigen können. Eine Unwucht ist eine Spezialform der Radungleichförmigkeiten, nämlich die periodische Ungleichförmigkeit erster Ordnung. Grundsätzlich unterscheidet man zwei Unwuchtarten: die statische und die dynamische Unwucht. Man spricht über eine statische Unwucht, wenn eine ungleichmäßige Massenverteilung zur Drehachse des Rades vorliegt. Die statische Unwucht verschiebt den Schwerpunkt aus der Drehachse heraus in Richtung der Unwuchtstelle und verursacht ein ständiges Ein- und Ausfedern des Rades der Drehfrequenz entsprechend. Eine dynamische Unwucht ist auch auf eine ungleichmäßige Massenverteilung zurückzuführen, jedoch in bezug auf die senkrecht zur Drehachse stehende Mittelebene, die durch den Schwerpunkt des Rades führt. Eine dynamische Unwucht neigt beim Drehen zu mit zunehmender Geschwindigkeit immer stärker werdender Kipp- oder Taumelbewegung. Äußeres Zeichen ist ein spürbares Flattern des Lenkrades, mithin an sich schon eine deutliche Senkung des Fahrkomforts. Nicht nur eine unsymmetrische Massenverteilung führt zu einer Ungleichförmigkeit, auch Unstetigkeiten in der radialen Federsteifigkeit, Exzentrizitäten der Lagerung, Herstellertoleranzen, Montagefehler und äußere Einflüsse im Fahrbetrieb beeinflussen die Irregularität.

Subjektiv sind Unwuchten leicht zu spüren, meßtechnisch ist der Aufwand jedoch wesentlich größer, um bereits kleine Unwuchten festzustellen. Die vorstehend vorgeschlagene mehrstufige Korrekturmethode liefert nicht nur ein von den störenden Einflüssen verschontes Drehgeschwindigkeitssignal v, sondern auch wertvolle Informationen bezüglich der systematischen Abweichungen des Rades und somit auch über die Ungleichförmigkeit. In dem vorstehend angegebenen Verfahren zur Erkennung eines Reifendruckverlustes werden die systematischen Fehler in der Geschwindigkeitserfassung eliminiert. Jedem Zahn des Impulsrades wird seine Abweichung gegenüber dem Sollwert zugewiesen. Die systematischen Abweichungen werden erfaßt, und es stehen in ausreichend feiner Abstufung pro Rad n = 48 Korrekturfaktoren zur Verfügung.

Bezugszeichenliste

| | |
|---|---|
| n | Anzahl der Zähne je Impulsrad, für Kfz ist n = 48 (Motorrad n=96) |
| i | laufender Index über die Zähne des Impulsrades |
| $\varepsilon_i$ | Fehler, einem Zahn zugeordnet |
| $k_i$ | Korrekturfaktor $k_i = \varepsilon_i + 1$ |
| $\kappa_i$ | je Umdrehung neu berechneter aktueller Korrekturfaktor |
| $\tau_i$ | aktueller Impulszählerstand |
| $\tau_{i+1}$ | Stützstellen |
| j | Schrittgröße eines Korrekturverfahrens |
| m | Fehlerordnung |
| $\Omega_i$ | Geschwindigkeit |
| N | Umdrehung des Rades |
| a | Zeitkonstante des ereignisgesteuerten Filters |
| S | Sensor |
| MS | Ausgangssignal / Meßsignal |
| W | Wandler |
| I | Impulssignal |
| $A(\varepsilon_i)$ | Aufbereitungseinheit für Fehler $\varepsilon_i$ je Zahn i |
| p | Reifendruck |
| v | Geschwindigkeit |
| SP | Speicher |

**Patentansprüche**

1.  Verfahren zur Überwachung des Zustands eines Rades eines Kraftfahrzeugs, bei dem ein Ausgangssignal (MS) eines Sensors (S) in ein im wesentlichen rechteckförmiges Impulssignal (I) umgeformt wird, wobei eine jeweilige Dauer der Impulse gemessen und ein insbesondere gewichteter Mittelwert zwischen der Dauer eines aktuellen Wertes und einem vorhergehenden Wert bestimmt wird, wobei ein aktueller Wert und ein vorhergehender Wert jeweils einen zeitlichen Abstand aufweisen bzw. eine bestimmte Schrittgröße (j) auseinander liegen und ein Korrekturfaktor ($k_i$) aus einer jeden Abweichung zwischen der Dauer eines aktuellen Wertes und einem jeweiligen Mittelwert bestimmt wird;
    **dadurch gekennzeichnet, dass** eine Schrittgröße (j) des Korrekturverfahrens an eine Fehlerordnung (m) einer Störung angepaßt wird.

2.  Verfahren nach Anspruch 1,
    **dadurch gekennzeichnet, dass** die Schrittgröße (j) mit einer zu eliminierenden periodischen Abweichung der m-ten Ordnung (m) nach der Formel $j = \frac{1}{m}\cdot\frac{n}{4}$ bestimmt wird, bei Kraftfahrzeugen insbesondere nach der Formel $j = \frac{1}{m}\cdot 12$.

3.  Verfahren nach einem der vorhergehenden Ansprüche,
    **dadurch gekennzeichnet, dass** mindestens zwei Schrittgrößen (j) kombiniert angewendet werden.

4.  Verfahren nach einem der vorhergehenden Ansprüche,
    **dadurch gekennzeichnet, dass** die Korrekturmethode als mehrstufiges Verfahren mit einer Reihenschaltung der Schrittgrößen j = 12 und j = 3 bei n = 48 Zähnen ausgeführt wird.

5.  Verfahren nach einem der vorhergehenden Ansprüche,
    **dadurch gekennzeichnet, dass** eine Filterung zur Minderung des Einflusses äußerer Störanregungen vorgenommen wird.

6.  Verfahren nach einem der vorhergehenden Ansprüche,
    **dadurch gekennzeichnet, dass** ein neu berechneter aktueller Faktor ($\kappa_{i-j}$) mit einem ereignisgetriggerten Filter nach einer $PT_1$-Struktur gefiltert wird.

7.  Verfahren nach einem der beiden vorhergehenden Ansprüche,
    **dadurch gekennzeichnet, dass** ein aktueller Faktor ($\kappa_{i-j}$) in jeder Umdrehung (N) eines Rades neu berechnet wird.

8.  Verfahren nach einem der drei vorhergehenden Ansprüche,
    **dadurch gekennzeichnet, dass** das Filter folgende Übertragungsfunktion ausführt:

$$k_{N,i} = \frac{a\cdot k_{N-1,j} + \kappa_i}{a + 1}.$$

9.  Vorrichtung zur Überwachung des Zustands eines Rades eines Kraftfahrzeugs, wobei die Vorrichtung einen Sensor (S) umfaßt, der zur Ausgabe eines Impulssignals (I) mit einem Signalwandler (W) und einer nachfolgenden Einheit ($A(\varepsilon_i)$, v, p) zur Ermittlung und Auswertung von Korrekturfaktoren ($k_i$) verbunden ist,
    **dadurch gekennzeichnet, dass** die Vorrichtung zur Umsetzung eines Verfahrens nach einem oder mehreren der vorhergehenden Ansprüche ausgebildet ist.

S

MS

W

$A(\varepsilon_i)$

$\frac{p}{v}$

I

$k_i$

$k_i$

SP

Fig. 1

$\kappa_i$

$+$

$-$

$1/(a+1)$

$z^{-1}$

$a$

$k_{N,i}$

Fig. 3

Fig. 4a    m = 1

Fig. 4b    m = 2

Fig. 4c    m = 3

Fig. 4d    m = 4

Fig. 4e    m = 5

Fig. 4f    m = 6

EP 1 304 576 A2

Fig. 5a

Fig. 5b

Fig. 6a

Fig. 6b

Fig. 6c

Fig. 6d